# FASCICULE DE BREVET EUROPEEN

(11) **EP 2 688 963 B1**
(45) Date de publication et mention de la délivrance du brevet: **12.06.2019**
(21) Numéro de dépôt: 12710711.8
(22) Date de dépôt: 21.03.2012
(51) Int. Cl.: C09D 4/00, B32B 9/00

(54) **PROCEDE DE PREPARATION D'UN FILM ORGANIQUE A LA SURFACE D'UN SUPPORT SOLIDE PAR TRANSFERT OU PAR PROJECTION**
VERFAHREN ZUR HERSTELLUNG EINES ORGANISCHEN FILMS AUF DER OBERFLÄCHE EINES FESTEN TRÄGERS DURCH TRANSFER ODER DURCH SPRÜHEN
PROCESS FOR PREPARING AN ORGANIC FILM AT THE SURFACE OF A SOLID SUPPORT BY TRANSFER OR BY SPRAYING

(30) Priorité: 22.03.2011 FR 1152348
(43) Date de publication de la demande: 29.01.2014
(73) Titulaire: Commissariat à l'Énergie Atomique et aux Énergies Alternatives, 75015 Paris (FR)
(72) Inventeur: BERTHELOT, Thomas, F-91940 Les Ulis (FR); VIEL, Pascal, F-92190 Meudon (FR); GARCIA, Alexandre, F-94200 Ivry Sur Seine (FR); JOUSSELME, Bruno, F-91300 Massy (FR); BAUDIN, Cécile, F-75014 Paris (FR)
(74) Mandataire: Ahner, Philippe
(86) Numéro de dépôt international: PCT/EP2012/054989
(87) Numéro de publication internationale: WO 2012/126943

(56) Documents cités:
- WO-A2-2008/078052
- US-A1- 2008 145 706
- US-A1- 2008 193 668

## Description

### DOMAINE TECHNIQUE

La présente invention selon les revendications de 1 à 14 concerne le domaine des revêtements organiques de surface, lesdits revêtements étant sous la forme de films organiques.

Elle est plus particulièrement relative à un procédé de préparation d'un revêtement organique sur une surface conductrice ou non de l'électricité, par transfert ou projection d'une solution réactive ou activable apte à produire un revêtement organique se présentant sous forme d'un film organique covalemment greffé sur cette surface.

### ÉTAT DE LA TECHNIQUE ANTÉRIEURE

A l'heure actuelle, il existe plusieurs techniques permettant la réalisation de films organiques minces sur des substrats.

Certaines de ces techniques ne permettent aucun greffage effectif entre le film et la surface revêtue. Parmi ces techniques, on peut citer les procédés par centrifugation (« spin coating »), par immersion (« dip coating ») ou par vaporisation (« spray coating »). D'autres techniques telles que le dépôt par plasma ou l'activation photochimique (ou photoactivation) permettent d'obtenir un film adhérent sans que la formation de liaisons à l'interface entre le film et la surface soit clairement établie.

D'autres techniques enfin permettent un greffage effectif d'un revêtement organique à la surface d'un support solide mais ne s'appliquent pas à tout type de polymère et à tout type de surface. Ainsi, la cataphorèse ou procédé d'électrodéposition cationique permet de recouvrir des surfaces conductrices à l'aide de polymères chargés, synthétisés préalablement à leur dépôt. L'auto-assemblage de monocouches repose sur une réaction chimique spécifique entre une partie d'un précurseur moléculaire et certains sites « récepteurs » de la surface et requiert donc l'utilisation de couples précurseur-surface spécifiques. Enfin, l'électrogreffage de polymères est une technique basée sur l'initiation puis la polymérisation, par propagation en chaîne, électro-induite de monomères électro-actifs sur la surface d'intérêt jouant à la fois le rôle d'électrode et celui d'amorceur de polymérisation [1]. L'électrogreffage requiert l'utilisation, d'une part, de précurseurs adaptés à son mécanisme d'initiation par réduction et de propagation et, d'autre part, d'une surface conductrice ou semi-conductrice de l'électricité.

Récemment, un procédé permettant de réaliser des revêtements organiques covalemment greffés, en conditions non-électrochimiques, facile à mettre en oeuvre sur un large choix de surfaces a été proposé. Ce procédé notamment décrit dans la demande internationale WO 2008/078052 et dans des demandes parentes telles que les demandes de brevet US 2008/145706 et US 2008/193668 implique un greffage chimique radicalaire qui permet l'établissement d'un lien covalent en une étape unique et simple **[2].**

Cette nouvelle technique met en oeuvre des entités moléculaires, notamment issues de sels d'aryle clivables tels que des sels de diazonium, possédant un électron non apparié pour former des liaisons de type liaison covalente avec la surface d'intérêt à greffer, lesdites entités moléculaires étant générées indépendamment de la surface sur laquelle elles sont destinées à être greffées. Ces entités moléculaires se greffent sur une surface, qu'elle soit conductrice ou semi-conductrice de l'électricité ou isolante.

Le procédé décrit dans la demande internationale WO 2008/078052 est mis en oeuvre par immersion dans des cuves de réaction. En effet, le support solide à la surface duquel le film organique doit être greffé est plongé dans une cuve remplie d'une solution de réaction comprenant les sels d'aryle clivables et éventuellement des monomères à insaturation éthylénique.

Le greffage localisé du film organique est également envisagé dans la demande internationale WO 2008/078052. Toutefois, cette variante fait appel à des masques utilisés pour recouvrir des zones localisées de la surface du support solide. Ces masques sont éliminés, une fois le procédé réalisé, ce qui entraîne, de fait, l'élimination du film organique greffé au niveau des masques.

Les inventeurs ont poursuivi leurs travaux afin d'identifier tout moyen permettant encore d'améliorer le procédé décrit dans la demande internationale WO 2008/078052 et notamment de l'améliorer en terme de consommation de réactifs et de localisation du greffage.

### EXPOSÉ DE L'INVENTION

La présente invention permet d'atteindre le but que se sont fixés les inventeurs et concerne donc un procédé amélioré pour greffer, dans des conditions non électrochimiques, sur au moins une partie de la surface d'un support solide, un film organique.

En effet, les travaux des inventeurs ont permis de mettre au point un procédé de greffage covalent d'un film organique à la surface d'un support solide basé sur le procédé décrit dans la demande internationale WO 2008/078052 utilisant un minimum de réactif.

Plus particulièrement, le procédé selon la présente invention implique non plus l'immersion des supports solides à greffer dans des solutions adaptées, désignées dans la présente par « solutions de synthèse », « solutions de réaction » ou « solutions réactives » mais l'application de ces dernières par projection ou transfert directement sur la surface du support solide à greffer.

Cette application directe permet, tout d'abord, de maîtriser la quantité de solutions mises en oeuvre, seule la quantité de matière requise étant utilisée. Comme certaines des solutions utilisables présentent des solvants, cette limitation de la quantité de solutions utilisées limite de fait la quantité de composés organiques volatils (COV) émis.

L'application par transfert ou par projection permet une grande maîtrise spatiale du dépôt de la solution et, par conséquent, du greffage, ce qui rend une telle application adaptée au greffage localisé et au besoin de structuration de la surface du support solide ou « patterning ».

Enfin, l'application par transfert ou par projection est adaptée, contrairement à la technique par immersion, à des pièces déroulantes telles que des bandes de plastique et à de la production continue. Elle est également adaptée à des pièces non manipulables notamment de grandes dimensions comme les coques de navires, les pipelines, etc. De même, le procédé selon la présente invention est, compte-tenu de sa facilité de mise en oeuvre, utilisable pour la production de pièces à l'unité.

Toutefois, l'application de très faibles volumes de solution réactive ne va pas sans quelques désavantages. En effet, les travaux des inventeurs ont montré que, contrairement au procédé par immersion décrit dans la demande internationale WO 2008/078052, l'oxygène peut être un facteur limitant voire inhibant le greffage chimique radicalaire dans le cadre du procédé selon la présente invention.

En fait, il y a un continuum dans toutes les situations qui vont des cuves industrielles de réaction au microréacteur c.a.d. à la goutte ou à la gouttelette en passant par le bêcher. Dans toutes ces situations, l'oxygène pose problème mais de façon graduée. Cela dépend de la concentration relative entre l'oxygène qui joue le rôle de « tueur » de radicaux et d'extrémités radicalaires en croissance. Sans vouloir être tenu par une quelconque théorie, dans un bêcher, les premiers radicaux formés par le procédé de la demande internationale WO 2008/078052 se font « tuer » par l'oxygène permettant ainsi de consommer cet oxygène. Donc les radicaux suivants rencontrent moins d'oxygène et participent à la réaction chimique radicalaire. La recolonisation du milieu par l'oxygène n'est pas aussi rapide que cela d'autant plus que le volume est important (plus de distance à parcourir). Par contre, plus les volumes sont petits, plus le réapprovisionnement par l'oxygène est dommageable à cause des longueur et profondeur de diffusion de l'oxygène très courtes. Par conséquent, à partir d'une taille de réacteur de type goutte voire gouttelette, comme utilisée dans le cadre de la présente invention, l'oxygène n'est pas consommé plus vite par la chimie qu'il est apporté par diffusion. Dans ce cas, le greffage chimique radicalaire peut être compromis parce que la chimie a une vitesse de fabrication des radicaux elle-même limite.

Afin de pallier cet inconvénient, il peut être nécessaire de mettre en oeuvre le greffage chimique radicalaire en présence d'une atmosphère pauvre en oxygène et notamment en présence d'une atmosphère inerte telle qu'une atmosphère d'azote ou dans une boîte à gant comme présenté à l'exemple I ci-après. Toutefois, de telles contraintes ne permettent pas une mise en oeuvre pour tous les supports précédemment envisagés.

Les inventeurs ont montré que l'utilisation de conditions non électrochimiques de type photochimique permet de pallier cet inconvénient. En effet, ces conditions permettent de générer instantanément beaucoup d'espèces radicalaires qui effondrent la teneur en oxygène même d'un microréacteur. On peut parler d'un effet de crête vu du côté des radicaux et d'un effet de déplétion brutal vu du côté de l'oxygène. Dans ces conditions, le greffage chimique radicalaire peut être terminé avant que l'oxygène ne réapparaisse par diffusion gazeuse dans la solution réactive de très faible volume.

Ainsi, la présente invention selon les revendications de 1 à 14 concerne un procédé de préparation d'un film organique à la surface d'un support solide, ce procédé comprenant les étapes consistant à :
a) appliquer, sur ladite surface, par transfert ou par projection, une solution contenant au moins un sel d'aryle clivable, un agent favorisant le transfert d'électrons et un donneur d'électrons sacrificiel, 1' application par transfert consistant a appliquer ou a déposer, sur ladite surface, une couche de ladite solution dont l'épaisseur n'excède pas 5 mm, 1' application par projection consistant a appliquer ou a déposer, sur ladite surface, des gouttes de ladite solution dont le volume est compris entre 1ρl et 400 µl ; b) soumettre ladite solution a une irradiation UV ou visible moyennant quoi des entités radicalaires sont formées a partir du sel d' aryle clivable et un film organique est greffé.

Dans le cadre de l'étape (a) du procédé selon l'invention, on entend par « application par transfert », l'application ou le dépôt d'une fine couche de solution réactive. Par « fine couche », on entend une couche n'excédant pas 5 mm d'épaisseur, notamment entre 1 nm et 1 mm d'épaisseur et, en particulier, entre 5 nm et 200 nm.

Les techniques d'application par transfert sont des techniques bien connues de l'homme du métier et ce, notamment dans le domaine des peintures ou de l'imprimerie et notamment des techniques d'imprimerie du type flexographie, tampographie et sérigraphie. Elles peuvent nécessiter, pour l'application de la solution réactive, un stylo, un pinceau, un rouleau, un marqueur, un tampon ou un microtampon.

Dans le cadre de l'étape (a) du procédé selon l'invention, on entend par « application par projection », l'application ou le dépôt de gouttes de solution réactive sur la surface du support solide.

Le volume des gouttes mises en oeuvre dans le cadre de la présente invention est compris entre 1 pl et 400 µl et, notamment, entre 2 pl et 200 µl. Il convient de noter que, lorsque la technique de projection mise en oeuvre est notamment la technique du jet d'encre, le volume des gouttes obtenues est dans la gamme basse ci-dessus proposée. En effet, dans ce cas, le volume des gouttes est compris entre 1 pl et 5 µl, notamment entre 2 pl et 2 µl, en particulier, entre 5 pl et 500 pl et, tout particulièrement, entre 10 pl et 100 pl. Pour certains des volumes utilisés, on peut utiliser le terme de « gouttelettes » ou « microgouttelettes » pour définir les gouttes obtenues. Il convient de souligner qu'une fois déposées, les gouttes peuvent fusionner pour former une fine couche de solution réactive telle que définie pour l'application par transfert.

Les techniques d'application par projection sont des techniques bien connues de l'homme du métier et peuvent nécessiter, pour l'application de la solution réactive, un pulvérisateur également connu sous le terme anglais de « spray », un pulvérisateur électrostatique, un pulvérisateur centrifuge, un vaporisateur, un brumisateur, un aérographe, un dispositif de type jet d'encre, une seringue, un dispositif de type dépôt de tache également connu sous le terme anglais de « spotter » et/ou une brosse.

Parmi les différentes techniques d'application envisagées telles qu'enduction avec un stylo, enduction avec un pinceau, enduction avec un rouleau, (micro)tamponnage, pulvérisation, brumisation, jet d'encre ou dépôt de taches, certaines offrent la possiblité de structurer le film organique greffé.

Ainsi, c'est notamment le cas dans la technique de jet d'encre au travers de la programmation du fonctionnement des buses, le tamponnage au travers de la fabrication des motifs du tampon. En variante, cette structuration peut être obtenue, dans le cadre de la présente invention, en utilisant un adhésif d'épargne du type pochoir ou des méthodes habituelles de photolithogravure.

Comme explicité dans la demande internationale WO 2008/078052, le greffage chimique radicalaire est applicable à un large choix de surfaces isolantes, semi-conductrices ou conductrices de l'électricité. La présente invention s'applique donc à un large choix de supports solides notamment tels qu'envisagés dans cette demande internationale.

Toutefois, de par les avantages de la présente invention, le support solide est avantageusement un support solide de grande taille ou un support solide déroulant tel qu'une coque de navire, une construction architecturale, une bande de plastique déroulante, une bande de papier déroulante, un tissu synthétique ou naturel, une feuille métallique ou un pipeline.

Au contraire, le support solide selon la présente invention peut être un support de petite taille sur lequel l'application par projection ou transfert conformément à la présente invention permet un greffage localisé d'un film organique. Un tel support peut être une puce utile en biotechnologie du type biopuce et, plus particulièrement, une lame en plastique ou en métal sur laquelle le procédé selon l'invention consiste avantageusement à projeter la solution réactive par spotting. Il peut s'agir d'un support utile en microélectronique et notamment en électronique moléculaire ; de la surface d'un cordage ou d'un capillaire notamment avec un dépôt de la solution réactive par spray. De plus, comme le film organique, une fois greffé par le procédé selon l'invention, peut être métallisé (cf. ci-après), le procédé selon l'invention notamment suivi par une métallisation peut être utilisé pour préparer des couches métalliques pour l'électronique souple ou plastique voire pour des applications décoratives.

Le procédé selon la présente invention met en oeuvre un « greffage chimique radicalaire ». Cette expression a, dans la présente invention, la même définition que dans la demande internationale WO 2008/078052. Il se réfère ainsi à l'utilisation d'entités moléculaires possédant un électron non apparié pour former des liaisons de type liaison covalente avec la surface du support solide, lesdites entités moléculaires étant générées indépendamment de la surface sur laquelle elles sont destinées à être greffées. La réaction radicalaire conduit donc à la formation de liaisons covalentes entre la surface du support solide et le film organique.

Ainsi, le film organique greffé à la surface du support solide se présente sous forme de (co)polymères, identiques ou différents, principalement issus de plusieurs unités monomères identiques et/ou différentes.

Comme envisagé dans la demande internationale WO 2008/078052, les unités monomères dont est issu le film organique peuvent être des unités uniquement dérivées d'un (ou plusieurs) sel(s) d'aryle clivable(s) ou dérivées d'au moins un sel d'aryle clivable et d'au moins un monomère polymérisable par voie radicalaire distinct d'un sel d'aryle clivable. Dans les deux cas envisagés, la première unité moléculaire des (co)polymères constituant le film organique greffé est issue d'un sel d'aryle clivable.

Par « sel d'aryle clivable », on entend, dans le cadre de la présente invention, un sel d'aryle clivable choisi dans le groupe constitué par les sels d'aryle diazonium, les sels d'aryle d'ammonium, les sels d'aryle phosphonium et les sels d'aryle sulfonium. Dans ces sels, le groupe aryle est un groupe aryle qui peut être représenté par R tel que défini ci-après.

Parmi les sels d'aryle clivables, on peut en particulier citer les composés de formule (I) suivante :

R-N₂⁺, A⁻ (I)

dans laquelle :
- A représente un anion monovalent et
- R représente un groupe aryle.

A titre de groupe aryle des sels d'aryle clivables et notamment des composés de formule (I) ci-dessus, on peut avantageusement citer les structures carbonées aromatiques ou hétéroaromatiques, éventuellement mono- ou polysubstituées, constituées d'un ou plusieurs cycles aromatiques ou hétéroaromatiques comportant chacun de 3 à 8 atomes, le ou les hétéroatomes pouvant être N, O, P ou S. Le ou les substituants peuvent contenir un ou plusieurs hétéroatomes, tels que N, O, F, Cl, P, Si, Br ou S ainsi que des groupes alkyles en C₁ à C₆ notamment.

Au sein des sels d'aryle clivables et notamment des composés de formule (I) ci-dessus, R est, de préférence, choisi parmi les groupes aryles substitués par des groupements attracteurs d'électrons tels que NO₂, C(O)H, les cétones, CN, CO₂H, NH₂ (sous forme de NH₃⁺), les esters et les halogènes. Les groupes R de type aryle particulièrement préférés sont les radicaux carboxyphényle, aminophényle, nitrophényle et phényle.

Au sein des composés de formule (I) ci-dessus, A peut notamment être choisi parmi les anions inorganiques tels que les halogénures comme I⁻, Br⁻ et Cl⁻, les halogénoborates tels que le tétrafluoroborate, les perchlorates et les sulfonates et les anions organiques tels que les alcoolates et les carboxylates.

A titre de composés de formule (I), il est particulièrement avantageux d'utiliser un composé choisi dans le groupe constitué par le tétrafluoroborate de phényldiazonium, le tétrafluoroborate de 4-nitrophényldiazonium, le tétrafluoroborate de 4-bromophényldiazonium, le chlorure de 4-aminophényldiazonium, le chlorure de 4-aminométhylphényldiazonium, le chlorure de 2-méthyl-4-chlorophényldiazonium, le tétrafluoroborate de 4-benzoylbenzènediazonium, le tétrafluoroborate de 4-cyanophényldiazonium, le tétrafluoroborate du 4-carboxyphényldiazonium, le tétrafluoroborate de 4-acétamidophényldiazonium, le tétrafluoroborate de l'acide 4-phénylacétique diazonium, le sulfate de 2-méthyl-4-[(2-méthylphényl)diazényl]benzènediazonium, le chlorure de 9,10-dioxo-9,10-dihydro-1-anthracènediazonium, le tétrafluoroborate de 4-nitronaphtalènediazonium et le tétrafluoroborate de naphtalènediazonium.

Dans le cadre de la présente invention tout comme dans le cadre de la demande internationale WO 2008/078052, le sel d'aryle clivable peut être soit introduit dans la solution réactive en l'état, soit préparé *in situ* notamment dans cette dernière.

Lorsque le sel d'aryle clivable est préparé *in situ,* on utilise avantageusement un précurseur d'un tel sel d'aryle clivable. Par « précurseur d'un sel d'aryle clivable », on entend dans le cadre de la présente invention une molécule séparée dudit sel d'aryle clivable par une étape opératoire unique et aisée à mettre en oeuvre.

Généralement, les précurseurs présentent une stabilité plus importante que le sel d'aryle clivable dans les mêmes conditions environnementales. Par exemple, les arylamines sont des précurseurs des sels d'aryle diazonium. En effet, par simple réaction, par exemple, avec du NaNO₂ dans un milieu aqueux acide, ou avec du NOBF₄ en milieu organique, il est possible de former les sels d'aryle diazonium correspondants.

Un précurseur avantageusement mis en oeuvre dans le cadre de la présente invention est un précurseur de sels d'aryle diazonium de formule (II) suivante :

R-NH₂ (II),

R étant tel que précédemment défini.

A titre d'exemples non limitatifs, un précurseur susceptible d'être mis en oeuvre dans le cadre de la présente invention est, en particulier, choisi dans le groupe constitué par la 4-aminophénylamine (ou p-phénylènediamine ou encore 1,4-diaminophénylène), la 4-nitrophénylamine, l'acide 4-amino-benzoïque et la 4-aminométhylphénylamine.

Dans le cas d'une préparation *in situ,* on peut appliquer, par transfert ou par projection, une solution contenant au moins un précurseur d'un sel d'aryle clivable et au moins un élément, permettant de transformer ce précurseur en le sel d'aryle clivable correspondant, tel que du NaNO₂ dans un milieu aqueux acide ou avec NOBF₄ dans un milieu organique.

Dans le cas d'une préparation au niveau de la surface du support solide, on peut appliquer, par transfert ou par projection, une 1^{ère} solution contenant le précurseur d'un sel d'aryle clivable puis appliquer, par transfert ou par projection, une 2^{nde} solution contenant au moins un élément, permettant de transformer ce précurseur en le sel d'aryle clivable correspondant, tel que du NaNO₂ dans un milieu aqueux acide ou du NOBF₄ dans un milieu organique. Dans ce dernier cas, la technique d'application de la 1^{ère} solution et celle de la 2^{nde} solution peuvent être identiques ou différentes.

Par exemple, on peut envisager de pulvériser une solution contenant une amine (1^{ère} solution) puis de pulvériser sur la même zone de surface une solution contenant du NaNO₂ (2^{nde} solution) . On peut également envisager de transférer la 1^{ère} solution au moyen d'un pinceau puis de pulvériser sur la fine couche obtenue la 2^{nde} solution.

Toutefois et plus particulièrement, le sel d'aryle clivable est introduit dans la solution réactive en l'état.

Par « monomère polymérisable par voie radicalaire », on entend un monomère susceptible de polymériser en conditions radicalaires après amorçage par une entité chimique radicalaire. Typiquement, il s'agit d'un monomère comportant au moins une liaison de type éthylénique i.e. une molécule de type éthylénique ou une molécule à insaturation éthylénique.

Parmi ces derniers, les monomères vinyliques, notamment les monomères décrits dans les demandes internationales WO 2005/033378 et WO 2006/097611 sont particulièrement concernés [3, 4].

Selon une forme de réalisation particulièrement avantageuse de l'invention, le (ou les) monomère(s) vinylique(s) est(sont) choisi(s) parmi les monomères de formule (III) suivante : 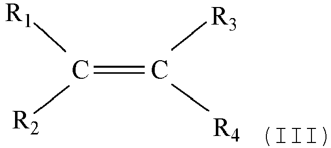 dans laquelle les groupes R₁ à R₄, identiques ou différents, représentent un atome monovalent non métallique tel qu'un atome d'halogène, un atome d'hydrogène, un groupe chimique saturé ou insaturé, tel qu'un groupe alkyle, aryle, un nitrile, un carbonyle, une amine, un amide ou un groupe -COOR₅ dans lequel R₅ représente un atome d'hydrogène ou un groupe alkyle en C₁-C₁₂ et de préférence en C₁-C₆.

Les monomères de formule (II) ci-dessus sont en particulier choisis dans le groupe constitué par l'acide acrylique, l'acétate de vinyle, l'acrylonitrile, le méthacrylonitrile, le méthacrylate de méthyle, le méthacrylate d'éthyle, le méthacrylate de butyle, le méthacrylate de propyle, le méthacrylate d'hydroxyéthyle (HEMA), le méthacrylate d'hydroxypropyle, le méthacrylate de glycidyle et leurs dérivés ; les acrylamides et notamment les méthacrylamides d'amino-éthyle, -propyle, -butyle, -pentyle et -hexyle, les cyanoacrylates, les diacrylates et di-méthacrylates, les tri-acrylates et tri-méthacrylates, les tétra-acrylates et tétraméthacrylates (tels que le pentaérythritol tétraméthacrylate), le styrène et ses dérivés, le parachloro-styrène, le pentafluoro-styrène, la N-vinyl pyrrolidone, la 4-vinyl pyridine, la 2-vinyl pyridine, les halogénures de vinyle, d'acryloyle ou de méthacryloyle, le di-vinylbenzène (DVB), et plus généralement les agents réticulants vinyliques ou à base d'acrylate, de méthacrylate, et de leurs dérivés.

Dans le cadre du procédé de l'invention, l'étape (b) correspond à l'étape consistant à soumettre le sel d'aryle clivable à des conditions non électrochimiques telle que définie dans la demande internationale WO 2008/078052. Toutefois et comme précédemment justifié, de telles conditions sont limitées, dans la présente invention, à des conditions non électrochimiques photochimiques et consistent à soumettre le sel d'aryle clivable à une irradiation (ou insolation) dans le domaine UV ou visible.

La longueur d'onde employée lors de l'étape (b) du procédé sera choisie, sans aucun effort inventif, en fonction du sel d'aryle clivable utilisé. Toute longueur d'onde appartenant au domaine UV ou au domaine visible est utilisable dans le cadre de la présente invention. Avantageusement, la longueur d'onde appliquée est comprise entre 300 et 700 nm, notamment entre 350 et 600 nm et, en particulier, entre 380 et 550 nm.

Des irradiations dans le visible et/ou dans l'UV peuvent être obtenues au moyen d'une lampe UV, d'une lampe excimère, d'une lampe de bureau, d'un laser, etc...

La durée de l'irradiation dans le cadre de l'étape (b) du procédé selon l'invention est comprise entre 1 sec et 1 h, notamment entre 5 sec et 30 min, en particulier, entre 15 sec et 15 min et, plus particulièrement, entre 30 sec et 10 min.

Dans une 1^{ère} forme de mise en oeuvre, l'étape (a) du procédé selon la présente invention est réalisée avant l'étape (b) du procédé.

Dans cette 1^{ère} forme de mise en oeuvre, la solution réactive contenant au moins un sel d'aryle clivable est déposée (ou appliquée) sur la surface du support solide avant que cette solution ne soit soumise à une irradiation UV-visible.

Dans cette 1^{ère} forme de mise en oeuvre, la solution réactive contenant au moins un sel d'aryle peut contenir en outre au moins un monomère polymérisable par voie radicalaire distinct dudit sel d'aryle clivable tel que précédemment défini.

En variante, la solution réactive contenant au moins un sel d'aryle clivable peut être appliquée puis une 2^{nde} solution distincte contenant au moins un monomère polymérisable par voie radicalaire est appliquée sur la même zone de la surface. L'application de la 2^{nde} solution peut être réalisée par la même technique que celle utilisée pour appliquer la solution réactive ou par une technique différente choisie parmi les techniques d'application par transfert ou par projection telles que précédemment définies, moyennant quoi la surface du support solide est revêtue d'une solution, sous forme de gouttes ou d'une couche, contenant au moins un sel d'aryle clivable et au moins un monomère polymérisable par voie radicalaire distinct dudit sel d'aryle clivable.

Dans cette 1^{ère} forme de mise en oeuvre, l'étape (b) peut consister à soumettre cette solution à une irradiation UV-visible telle que précédemment définie.

Il convient de noter que la séparation de l'étape de transfert ou de projection (étape (a)) de l'étape d'activation (b) présente un avantage supplémentaire, notamment dans le cadre de supports de grande taille pour lesquels transfert ou projection peuvent durer longtemps. Dans ce cas, le début de la réaction chimique n'est déclenché par la lumière qu'une fois le transfert ou la projection terminé(e).

Dans une 2^{ème} forme de mise en oeuvre, les étapes (a) et (b) du procédé selon la présente invention sont mises en oeuvre simultanément.

Dans cette 2^{ème} forme de mise en oeuvre, la solution réactive contenant au moins un sel d'aryle clivable et éventuellement au moins un monomère polymérisable par voie radicalaire distinct est soumise à une irradiation UV-visible au moment de son application.

Il convient de remarquer que, dans cette forme de mise en oeuvre, il est avantageux de limiter l'irradiation UV-visible à la surface sur laquelle la surface réactive est en train d'être projetée ou transférée et ce, pour éviter que le film organique ne se forme au niveau des buses et orifices des moyens mis en oeuvre lors de l'application par projection tels que précédemment définis et ne les bouche.

La quantité de sels d'aryle clivables, de précurseurs de sels d'aryle clivables, de monomères polymérisables par voie radicalaire utilisables dans la solution de réaction sont conformes aux quantités envisagées dans la demande internationale WO 2008/078052.

De même, la solution réactive mise en oeuvre dans le cadre de la présente invention peut contenir, en tant que solvant, un solvant qui peut être :
- soit un solvant protique, i.e. un solvant qui comporte au moins un atome d'hydrogène susceptible d'être libéré sous forme de proton et avantageusement choisi dans le groupe constitué par l'eau, l'eau désionisée, l'eau distillée, acidifiées ou basiques, l'acide acétique, les solvants hydroxylés comme le méthanol et l'éthanol, les glycols liquides de faible poids moléculaire tels que l'éthylèneglycol, et leurs mélanges ;
- soit un solvant aprotique, i.e. un solvant qui n'est pas susceptible de libérer un proton ou d'en accepter un dans des conditions non extrêmes et avantageusement choisi parmi la diméthylformamide (DMF), l'acétone, l'acétonitrile et le diméthyl sulfoxyde (DMSO) ;
- soit un mélange d'au moins un solvant protique et d'au moins un solvant aprotique.

En variante, la solution réactive peut ne pas contenir de solvant. Dans ce cas, la solution réactive contient au moins un sel d'aryle clivable et au moins un monomère tel que précédemment défini, ce dernier se présentant sous forme liquide et faisant office de solvant.

La solution réactive mise en oeuvre dans le cadre de la présente invention peut également contenir un (ou plusieurs) tensio-actif(s) notamment choisi(s) dans le groupe constitué par les tensio-actifs anioniques, les tensio-actifs cationiques, les tensio-actifs zwitterioniques, les tensio-actifs amphotères et les tensio-actifs neutres (non-ioniques) et, notamment, les tensio-actifs décrits dans la demande internationale WO 2008/078052. Typiquement la concentration en tensio-actifs sera comprise entre 0,5 mM et 5 M environ, de préférence entre 0,1 mM et 150 mM environ.

Avantageusement, la solution réactive éventuellement transférée ou projetée est maintenue dans le noir avant la mise en oeuvre de l'étape (b) du procédé selon l'invention. En d'autres termes, il est avantageux de réaliser l'étape de préparation de la solution réactive et l'étape de transfert ou de projection de cette dernière dans des conditions de faible lumière. Par « faible lumière », on entend une source lumineuse dont la quantité de lumière visible (longueur d'onde comprise entre 380 nm à 780 nm) reçue sur une surface donnée est inférieure à 20 Lux.

Des conditions plus particulières directement liées à l'application par transfert ou par projection peuvent être mises en oeuvre dans le cadre de la présente invention.

Tout d'abord, la solution réactive peut contenir en plus des éléments précédemment décrits au moins un élément choisi dans le groupe constitué par un épaississant, un gélifiant ou un agent de réticulation.

Cet élément additionnel permet de modifier la fluidité ou la viscosité de la solution réactive. Il convient de remarquer que les agents tensioactifs précédemment envisagés qui permettent de limiter l'évaporation de la solution réactive peuvent également participer à cette modification de la fluidité ou de la viscosité. Par conséquent, la solution réactive peut contenir en plus des éléments précédemment décrits au moins un élément choisi dans le groupe constitué par un épaississant, un gélifiant, un tensioactif ou un agent de réticulation.

Cet élément additionnel est optionnel. En effet, si la technique d'application utilisée dans le procédé selon l'invention est un jet d'encre utilisant une buse de petite dimension, la viscosité de la solution réactive peut voire doit être faible et la présence d'un élément additionnel n'est pas obligatoirement nécessaire. Au contraire, un élément additionnel peut être utile pour relever le « seuil de coulure » d'une solution réactive se présentant sous forme d'une couche liquide déposée sur une surface verticale soit par enduction directe (pinceau) soit par spray en couches épaisses. Dans ces cas de figure, la gravité devient importante et il peut être nécessaire d'ajouter un élément modifiant et notamment augmentant la viscosité de la solution réactive.

Les épaississants, gélifiants et agents de réticulation utilisables dans le cadre de la présente invention sont bien connus de l'homme du métier. Ces additifs sont notamment utilisés dans les formulations d'encre afin de contrôler la mouillabilité, la viscosité, le séchage des gouttelettes projetées par jet d'encre. A titre d'exemples illustratifs et non limitatifs d'épaississants utilisables, on peut citer un polyol comme le glycérol et des polymères, tels que polyéthylène glycol, l'acide polyacrylique ou un copolymère acide acrylique-acide maléique, préexistants dans la solution réactive, de pré-polymères, de polymères téléchéliques ou de multi-monomères. Un agent de réticulation permet également d'obtenir un film organique plus épais.

L'homme du métier saura déterminer, sans effort inventif, la nécessité d'ajouter un tel élément et la quantité à mettre en oeuvre en fonction de la solution réactive et du type d'application utilisés.

Les avantages obtenus en utilisant comme conditions non électrochimiques une irradiation UV-visible peuvent encore être accrus en ajoutant, dans la solution réactive, un agent favorisant le transfert d'électrons également désigné par « agent photosensibilisateur » et éventuellement un donneur d'électrons sacrificiel. Avantageusement, le procédé selon l'invention est amélioré en ajoutant, dans la solution réactive, un couple formé par un agent favorisant le transfert d'électrons et un donneur d'électrons sacrificiel. Ce dernier soumis à l'irradiation UV-visible produit une grande quantité d'électrons.

A titre d'exemples illustratifs et non limitatifs d'agents favorisant le transfert d'électrons, on peut citer les complexes de ruthénium (II) tels que le chlorure de Tris(bipyridine) ruthénium (II) ou bien encore les porphyrines ou la chlorophylle.

A titre d'exemples illustratifs et non limitatifs de donneurs d'électrons sacrificiels, on peut citer l'isopropanol et les amines de type donneurs d'électrons telles que la triméthylamine, la triéthylamine, la tripropylamine, la tributylamine, la diméthyléthanolamine, la diméthyldodécylamine, la pyridine, la quinoléine, l'isoquinoléine et la lipdine.

Il convient de noter que la présence de l'agent favorisant le transfert d'électrons ou celle du couple formé par un tel agent photosensibilisateur et un donneur d'électrons sacrificiel est obligatoire. Des résultats comparables peuvent être obtenus sans nécessiter de photosensibilisateur et ce, notamment en fonction de la nature du substituant sur le cycle du sel d'aryle clivable. Ceci est, par exemple, vérifié lorsque le sel d'aryle clivable mis en oeuvre est le 4-nitrobenzène diazonium : des résultats comparables peuvent être obtenus que ce sel soit utilisé en présence ou non de chlorure de Tris(bipyridine) ruthénium (II) et de triéthylamine (respectivement, exemple IV et exemple III). A noter toutefois que, pour de nombreux sels d'aryle clivables, la présence de l'agent favorisant le transfert d'électrons ou celle du couple formé par un tel agent photosensibilisateur et un donneur d'électrons sacrificiel permet d'améliorer le greffage obtenu notamment en terme de rapidité.

Le donneur d'électrons sacrificiel pouvant être une base, il peut être souhaitable, lors de la préparation de la solution réactive, de l'introduire dans cette dernière, une fois le sel d'aryle dissous et stabilisé notamment à pH acide. La partie expérimentale ci-après présente des protocoles de préparation de solutions réactives, à titre illustratif et non limitatif.

En variante encore, une fois le transfert ou la projection réalisé(e) i.e. étape (a) telle précédemment définie, un matériau, souple ou rigide, transparent peut être appliqué et ce, notamment sur une faible quantité de solution réactive déposée sur le matériau à traiter. Cette protection transparente permet de réduire le contact entre la solution réactive et l'oxygène atmosphérique, sans perturber l'étape de soumission à des conditions non électrochimiques photochimiques i.e. l'étape (b) telle que précédemment définie. Cette variante permet d'étaler la solution réactive sur une grande surface et ce, sans exercer une pression élevée, les forces capillaires suffisant. A titre d'exemple, 100 µl de solution réactive sous forme d'encre gel plaqués sous une lame de verre couvrent typiquement 10 cm².

Les étapes d'application de la solution réactive par transfert ou par projection et de soumission à des conditions non électrochimiques photochimiques i.e. les étapes (a) et (b) telles que précédemment définies peuvent être répétées au moins deux, trois, quatre ou cinq fois, permettant de ce fait d'obtenir une structure multicouche. Entre chaque répétition, la surface du support solide peut être soumise à un traitement tel qu'un lavage pour éliminer les réactifs non utilisés et les oligomères ou polymères non greffés et/ou un séchage.

Dans cette variante, le film organique précédemment greffé devient la surface du support solide pour la mise en oeuvre de nouvelles étapes (a) et (b) selon le procédé de l'invention et selon l'une quelconque des formes de mise en oeuvre et variantes précédemment envisagées. De ce fait, on peut obtenir une couche très épaisse du type multi-couche formée par plusieurs couches de films organiques de nature identique ou différente.

Préalablement à l'application par transfert ou par projection de la solution réactive sur la surface du support solide, cette dernière peut être soumise à un (pré-)traitement oxydant.

Par « (pré-)traitement oxydant », on entend, dans le cadre de la présente invention, un traitement (ou pré-traitement) visant à oxyder la surface du support solide mis en oeuvre et/ou à préparer cette surface à une future oxydation par formation de radicaux. Une oxydation modifie la surface du support solide notamment en y fixant et/ou en y introduisant des groupements riches en oxygène tels que des groupements de type carboxylique (-COOH), hydroxyle (-OH), alcoxyle (-OX avec X représentant un groupe alkyle, un groupe acyle ou un groupe aroyle), carbonyle (-C=O), percarbonique (-C-O-OH) et parfois amide (-CONH).

Un tel traitement oxydant repose sur deux grands types de modifications de surface fondés sur :
- des traitements physiques tels qu'un traitement à la flamme, un traitement par effet corona, par plasma notamment d'oxygène, un traitement aux UV, un traitement aux rayons X ou y, un traitement par irradiation aux électrons et aux ions lourds, lesdits traitements étant mis en oeuvre en présence d'air, d'oxygène ou d'ozone, ou
- des traitements chimiques tels qu'un traitement chimique de type Fenton consistant à mettre en contact la surface du support solide avec une solution contenant un peroxyde XOOX et des ions ferreux (Fe²⁺), un traitement à la potasse alcoolique, un traitement par un acide fort ou faible (HCl, H₂SO₄, HNO₃, HClO₄, H₃PO₄, etc.), un traitement à la soude, un traitement par un oxydant fort (KMnO₄, K₂Cr₂0₇, KClO₃ ou CrO₃ dans l'acide chlorhydrique, l'acide sulfurique ou dans l'acide nitrique) et un traitement à l'ozone.

Dans le cadre de la présente invention, le traitement oxydant préalable peut consister en un traitement chimique, en un traitement physique, en une combinaison d'au moins deux traitements chimiques, en une combinaison d'au moins deux traitements physiques ou en une combinaison d'au moins un traitement chimique avec au moins un traitement physique, le(s)dit(s) traitement(s) chimique(s) ou physique(s) étant tel(s) que précédemment défini(s).

La présente invention concerne également un procédé tel que précédemment décrit et dans lequel les étapes (a) et (b) sont suivies d'une étape consistant à appliquer, sur le film organique obtenu, par transfert ou par projection, une suspension de nano-objets.

Les nano-objets de la suspension peuvent être magnétiques, métalliques ou carbonés et choisis parmi des nanoparticules, des nanocristaux, des nanofils, des nanotubes ou des nanocolonnes. Avantageusement, cette suspension de nano-objets est une suspension de nanoparticules.

Les films organiques greffés selon le procédé de la présente invention peuvent être utilisés pour toutes les applications déjà envisagées dans la demande internationale WO 2008/078052 mais également dans les demandes issues de la technologie décrite dans cette demande. Ainsi, les films greffés peuvent être utilisés dans un procédé de métallisation. Ainsi, les étapes (a) et (b) du procédé selon l'invention peuvent être suivies d'une étape de métallisation.

Cette dernière peut être mise en oeuvre comme décrit dans la demande internationale WO 2008/078052 à savoir en utilisant un film organique greffé conformément à la présente invention comportant en outre des nano-objets puis en mettant en contact un tel film avec une solution contenant au moins un sel métallique susceptible d'être réduit par ces nano-objets. Ces nano-objets qui peuvent être magnétiques, métalliques ou carbonés sont notamment des nanoparticules, des nanocristaux, des nanofils, des nanotubes ou des nanocolonnes. De plus, ces nano-objets peuvent être fonctionnalisés comme envisagé dans la demande internationale WO 2008/078052.

Le film greffé selon le procédé de la présente invention peut comporter des nano-objets, ces derniers étant intégrés dans le film au moyen d'une suspension de nano-objets mis en contact avec le film. Cette mise en contact peut être aussi bien une immersion qu'une application par transfert ou par projection. En variante, les nano-objets sont déjà présents dans les solutions réactives utilisées lors du procédé selon la présente invention et sont, de fait, introduits dans le film organique lors de sa préparation.

De façon alternative, cette métallisation peut consister à utiliser un film organique greffé conformément au procédé selon la présente invention présentant un groupement (ou une structure) apte à chélater un ion métallique ; à mettre ce film en contact avec au moins un ion métallique ; puis à soumettre le film avec des ions métalliques chélatés à des conditions permettant leur réduction. La métallisation peut être obtenue soit immédiatement après cette réduction, soit après mise en contact avec un bain Electroless. Les différentes mises en contact envisagées sont avantageusement effectuées par immersion. Le groupement (ou structure) apte à chélater des ions métalliques est soit présent (e) sur le film greffé par nature (cf. Exemple II ci-après groupements -COOH/-COO⁻ de l'acide polyacrylique), soit introduit dans ce dernier une fois greffé. Ce groupement (ou structure) est choisi parmi les aminés, les amides, les éthers, les carbonyles, les carboxyles, les carboxylates, les phosphines, les oxydes de phosphines, les thio-éthers, les disulfures, les urées, les éther-couronnes, les aza-couronnes, les thio-couronnes, les cryptands, les sépulcrands (en anglais « sepulcrates »), les podands, les porphyrines, les calixarènes, les pyridines, les bipyridines, les terpyridines, les quinoléines, les composés de l'orthophénantroline, les naphtols, les iso-naphtols, les thiourées, les sidérophores, les antibiotiques, l'éthylène glycol, les cyclodextrines, ainsi que les structures moléculaires substituées et/ou fonctionnalisées à partir de ces groupes fonctionnels, et/ou une ou plusieurs cavité(s) complexante(s) de type verrous redox.

En variante encore, une métallisation peut être obtenue en utilisant une solution réactive contenant, en plus des éléments précités, au moins un sel métallique tel que précédemment défini moyennant quoi la chélation du sel métallique par ou son inclusion dans le film organique se fait simultanément avec le greffage de ce dernier à la surface du support solide. Le film avec des ions métalliques chélatés est ensuite soumis à des conditions permettant leur réduction. La métallisation peut être obtenue soit immédiatement après cette réduction, soit après mise en contact avec un bain Electroless. Les différentes mises en contact envisagées sont avantageusement effectuées par immersion.

La métallisation peut être combinée à la structure multicouche précédemment envisagée. Dans ce cas, au moins une 1^{ère} couche est déposée selon le procédé de l'invention puis métallisée avant qu'une 2^{nde} couche ne soit déposée sur cette 1^{ère} couche métallisée puis, à son tour, métallisée.

La présente invention concerne également un kit d'éléments pour la mise en oeuvre d'un procédé selon la présente invention comprenant :
- dans un compartiment (ci-après désigné '1^{er} compartiment »), une solution comprenant au moins un sel d'aryle clivable tel que précédemment défini ou un précurseur de celui-ci tel que précédemment défini et
- des moyens pour appliquer par transfert ou par projection cette solution à la surface d'un support solide.

Ces moyens sont notamment choisis parmi un pinceau, un rouleau, un marqueur, un stylo, un tampon, un microtampon, un pulvérisateur, un pulvérisateur électrostatique, un pulvérisateur centrifuge, un vaporisateur, un brumisateur, un aérographe, une seringue, un dispositif de type jet d'encre, un dispositif de type dépôt de tache et/ou une brosse.

Le kit d'éléments selon la présente invention peut en outre comprendre au moins un autre compartiment comprenant un (ou plusieurs) élément(s) choisi(s) parmi :
- au moins un monomère polymérisable par voie radicalaire différent du sel d'aryle clivable tel que précédemment défini ou une solution contenant au moins un monomère polymérisable par voie radicalaire différent du sel d'aryle clivable tel que précédemment défini,
- des sels métalliques ou une solution contenant de tels sels,
- au moins un nano-objet tel que précédemment défini ou une suspension d'au moins un nano-objet tel que précédemment défini,
- une solution apte à élaborer un sel d'aryle clivable à partir de son précurseur telle que précédemment définie.

L'autre compartiment du kit d'éléments selon la présente invention peut comprendre 2 ou 3 des éléments précités et avantageusement tous les éléments précités. En variante, le kit d'éléments peut comprendre un autre, deux autres, trois autres ou quatre autres compartiments contenant chacun un des éléments précités.

Avantageusement, un solvant identique ou différent est contenu dans chacune des solutions précitées.

Les solutions des différents compartiments et notamment du 1^{er} compartiment pourront bien entendu contenir différents autres agents identiques ou différents tels que des tensio-actifs, des épaississants, des gélifiants, des agents de réticulation, des agents favorisant le transfert d'électrons et des donneurs d'électrons sacrificiels.

La présente invention concerne également un procédé pour réaliser au moins une piste d'écoulement d'un liquide d'intérêt sur un support solide. Ce procédé consiste à préparer un film organique mouillable par ledit liquide d'intérêt à la surface dudit support solide selon un procédé de préparation tel que précédemment défini.

Cet aspect de la présente invention se base sur la préparation d'une (ou plusieurs) piste(s) à la surface d'un support solide présentant une mouillabilité vis-à-vis d'un liquide d'intérêt, tandis que les zones entourant cette (ou ces) piste(s) sont moins mouillables ou voire non mouillables vis-à-vis de ce liquide. En effet, d'une part, le greffage du film organique, suite à un dépôt par projection ou transfert de solution réactive, permet d'obtenir des pistes de petites surfaces bien délimitées. D'autre part, un choix judicieux du sel d'aryle clivable et éventuellement des monomères polymérisables par voie radicalaire permet d'obtenir un film organique mouillable par le liquide d'intérêt, un tel choix étant un travail de routine pour l'homme du métier.

Pour rappel, la mouillabilité est définie par l'angle de contact (ou angle de raccordement) que forme une goutte du liquide d'intérêt avec la surface sur laquelle est greffé le film organique au niveau du site de dépôt de cette goutte.

Ainsi, lorsque l'on précise que les sites de dépôt sont mouillables vis-à-vis du liquide, cela signifie, généralement, qu'une goutte de ce liquide déposée va former par rapport au site de dépôt un angle de contact présentant généralement une valeur inférieure à 70° et notamment inférieure à 60° tandis que, pour les zones non mouillables entourant ledit site, cela signifie que l'angle de contact formé entre une goutte du liquide et ces zones présente généralement une valeur supérieure à 90° et notamment supérieure à 95°. D'un point de vue pratique, cela signifie que le liquide, lorsqu'il est déposé sur l'ensemble de la surface du support solide, se concentre au niveau des pistes mouillables par ce liquide et ne reste pas ou peu au niveau des zones non mouillables.

D'un point de vue chimique, un liquide va mouiller un substrat solide s'il présente une affinité chimique vis-à-vis de celui-ci. Ainsi des pistes hydrophiles sur un support solide moins hydrophile voire hydrophobe vont être mouillables vis-à-vis des liquides hydrophiles et inversement.

Par mise en oeuvre d'un tel procédé, il est ainsi possible d'obtenir un support solide notamment en verres inorganiques ou organiques, à la surface duquel sont « intégrée(s) » une (ou plusieurs) piste(s) directionnelle(s) pour l'écoulement d'un liquide d'intérêt qui joue(nt) le rôle de gouttière (s). Cet aspect de l'invention trouve des applications pour des supports solides tels que fenêtres, lunettes/masques, pare-brises ou visières casques..., le liquide d'intérêt étant, dans ces applications, de l'eau, de l'eau de pluie ou de l'eau de mer.

D'autres caractéristiques et avantages de la présente invention apparaîtront encore à l'homme du métier à la lecture des exemples ci-dessous donnés à titre illustratif et non limitatif, en référence aux figures annexées.

### BRÈVE DESCRIPTION DES DESSINS

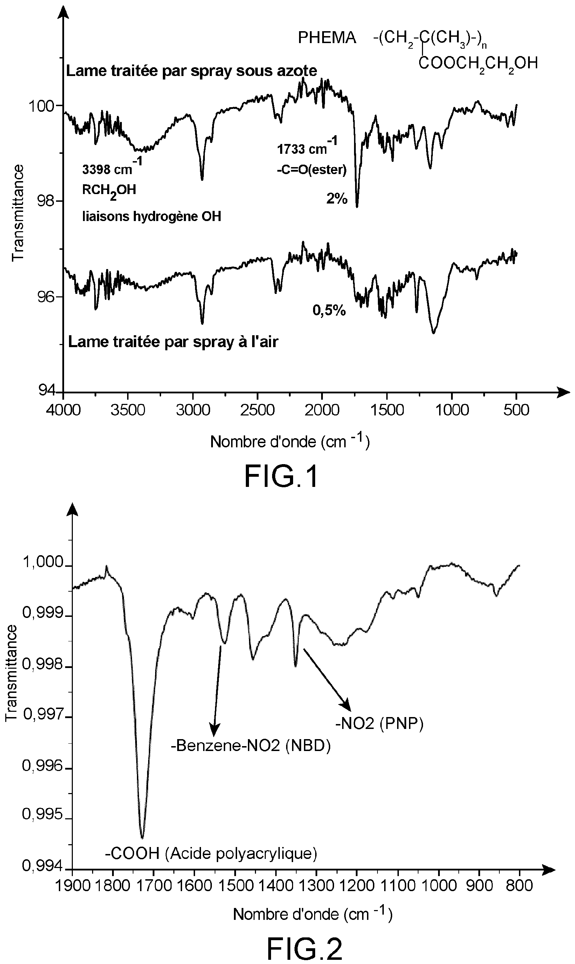

La Figure 1 présente les spectres obtenus par spectroscopie infrarouge à transformée de Fourier (FTIR) de 2 lames d'or sur lesquelles a été pulvérisée, par spray, à l'air ambiant ou sous azote, une solution de réaction contenant un sel d'aryle diazonium [tétrafluoroborate de nitrobenzène diazonium (NBDT)], un monomère polymérisable par voie radicalaire [HydroxyEthylMéthAcrylate (HEMA)] et un amorceur chimique (acide ascorbique).
La Figure 2 présente le spectre infrarouge d'une lame d'or sur laquelle a été imprimée par jet d'encre une solution de réaction contenant un sel d'aryle diazonium [4-nitrobenzène-diazonium (NBD)], un monomère polymérisable par voie radicalaire [Acide Acrylique (AA)] et un couple Complexe favorisant le transfert d'électron à base de Ruthénium / Donneur sacrificiel, le greffage chimique radicalaire étant amorcé par une irradiation UV.

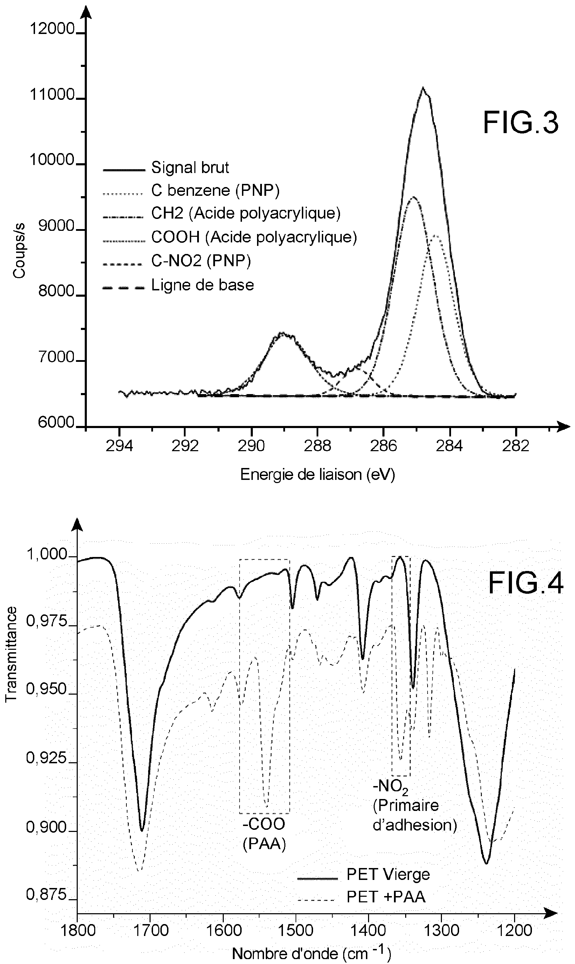

La Figure 3 présente le spectre en spectroscopie de photoélectrons X de la lame traitée conformément à la Figure 2.
La Figure 4 présente les spectres obtenus par FTIR de 2 substrats polyéthylène téréphtalate. Le premier est un PET vierge et le second est un substrat traité à l'air ambiant, par une solution contenant un sel d'aryle diazonium [NBDT], un monomère polymérisable par voie radicalaire (AA), un épaississant (polyacrylique acide), imprimé par jet d'encre et irradié par une lampe de bureau, puis rincée à l'eau et séchée à l'azote.

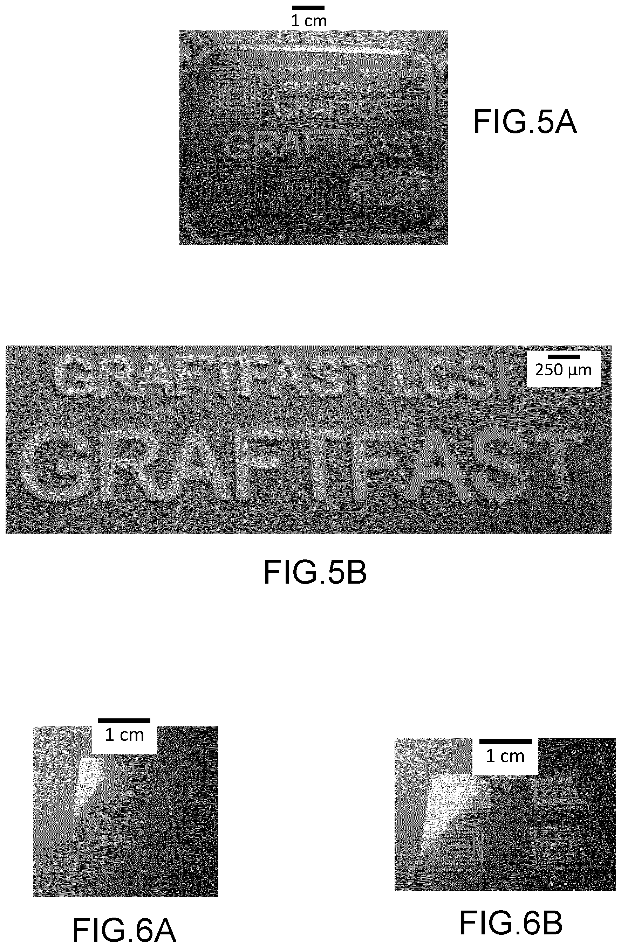

Les Figures 5A et 5B sont des photographies à différents grossissements d'un substrat polyéthylène téréphtalate traité comme décrit pour la Figure 4 puis immergé dans une solution réductrice (NaBH₄ 0.1M, NaOH 0.1M, 3 min, 50°C) et enfin un bain Electroless commercial de cuivre (M Copper 85) pendant 15 min, rincé à l'eau et séché à l'azote.
La Figure 6 présente des photographies d'un substrat polyéthylène téréphtalate traité par une solution contenant un sel d'aryle diazonium (NBDT), un monomère polymérisable par voie radicalaire (AA), un épaississant (polyacrylique acide), un complexe de Ruthénium / Donneur sacrificiel (triethylamine) et un sel de cuivre CuSO₄, 5H₂O, imprimé par jet d'encre et irradié par une lampe de bureau, puis immergé dans une solution réductrice (Figure 6A) puis, un bain Electroless commercial de cuivre et enfin un bain Electroless d'Or, rincé à l'eau et séché à l'azote (Figure 6B).

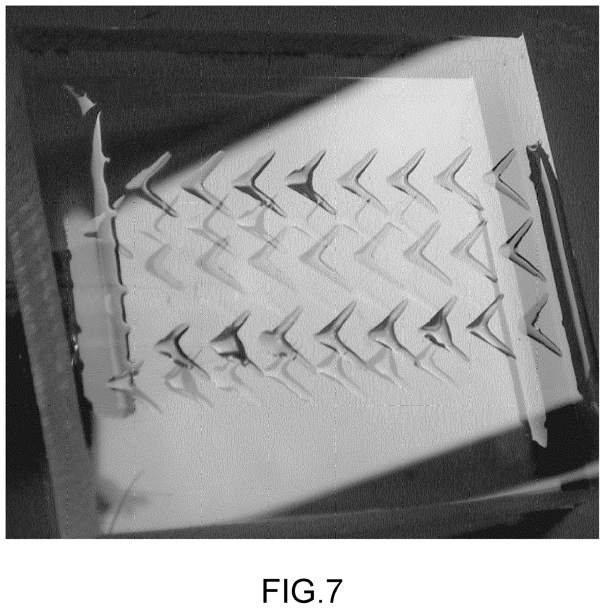

La Figure 7 est une photographie d'une plaque de plexiglas@ de 10 X 6 cm traitée par la formulation N°2 telle que définie au point V ci-après puis passée sous un filet d'eau du robinet.

### EXPOSÉ DÉTAILLÉ DE MODES DE RÉALISATION PARTICULIERS

### I. Travaux préalables au procédé de l'invention.

### 1.1. Solution vaporisée.

Dans un bécher muni d'un barreau aimanté, ont été versés 30 ml d'eau déionisée, 4,5 ml d'HEMA (1,1 M) et 0,225 g de tétrafluoroborate de nitrobenzène diazonium (NBDT) (2,7 10⁻² M). Enfin, 0,3 ml d'une solution d'acide ascorbique récemment préparée à 0,29 M, soit 2,5 10⁻³ M est versé dans le milieu réactionnel.

### I.2. Procédé mis en oeuvre.

Cette solution de fonctionnalisation est rapidement versée dans le flacon du spray. Ce dernier et une lame d'or préalablement traitée par UV-ozone sont disposés dans une boîte à gants purgée 3 fois à l'azote et gonflée d'azote.

La solution de réaction, sous pression dans le spray, est projetée sur la lame tenue en position oblique. La lame, avec une fine couche de liquide continue déposée sur la surface d'or, est abandonnée en position horizontale dans la boîte à gants pendant une heure.

Une autre lame d'or subit le même traitement mais à l'extérieur de la boîte à gants.

Après une heure de réaction, les lames sont rincées par des jets d'eau, éthanol et acétone puis elles sont soumises aux ultrasons, dans le DMF pendant 2 min, dans l'eau et enfin l'acétone pendant 30 sec. Elles sont ensuite séchées par soufflage d'azote avant d'être analysées par FTIR. Les spectres FTIR ainsi obtenus sont représentés sur la Figure 1.

A l'air ambiant, les gouttelettes sont au contact de l'air. L'oxygène de l'air « tue » les radicaux. Les réactions d'amorçage et surtout de propagation sont inhibées. La polymérisation n'a pas lieu. Seuls quelques oligomères sont synthétisés.

### II. Protocole de greffage de PAA par voie jet d'encre et irradiation UV/visible suivi d'une métallisation sur des substrats rigides de polymères techniques.

### II.1. Greffage de PAA.

Tout d'abord, afin d'éviter toute pollution ou contamination par des agents externes, les substrats mis en oeuvre (i.e. ABS, ABS-PC, polyamide (PA), polychlorure de vinyle (PVC)) sont soumis à un rinçage, selon leur nature, au solvant et/ou détergent industriel (TFD4) pendant 10 min sous ultrasons.

Ce nettoyage est complété par un (pré-) traitement oxydant préalable par irradiation UV/Ozone (UV/O₃) pendant 10 min qui permet d'éliminer les polluants organiques. Dans le cadre de nombreux substrats, cette irradiation UV/Ozone induit aussi l'activation de la surface par oxydation. Cette oxydation se traduit par une augmentation de la polarité qui induit une augmentation de l'énergie de surface et donc une diminution de l'angle de contact.

La réduction des sels de diazonium s'effectue par irradiation dans l'UV/Visible pour des longueurs d'onde notamment de 350 à 550 nm.

Par ailleurs, pour favoriser la réduction, un complexe de ruthénium favorisant le transfert d'électron et un donneur d'électrons sacrificiel sont ajoutés dans le milieu réactionnel. Ainsi le système complet contient un sel de diazonium/l'acide acrylique/Complexe favorisant le transfert d'électron à base de Ruthénium/Donneur sacrificiel.

Ainsi, du 4-nitrobenzènediazonium (NBD ; 1,1846 g, 5.10⁻² M) a été solubilisé dans une solution d'eau MilliQ (100 ml). A cette solution, 100 ml d'une solution de chlorure de Tris(bipyridine) ruthénium (II) (Complexe Ru ; 3,74.10⁻³ g, 5.10⁻⁵ M), 100 ml d'AA et 100 ml de triéthylamine (TEA, 5.10⁻² M) comme donneur sacrificiel d'électrons sont ajoutés.

La solution est déposée ensuite directement sur le substrat prétraité par différentes méthodes. Avantageusement, il s'agit d'une impression par jet d'encre ou plus simplement par dépôt de gouttes.

Le substrat + gouttes est ensuite irradié par une lampe UV/visible pour une durée allant de quelques secondes à une heure, préférentiellement de 30 sec à 10 min. Les échantillons sont ensuite rincés successivement pendant 10 min sous ultrasons à l'eau MilliQ, dans une solution de soude à 0,1 M puis de nouveau à l'eau MilliQ avant d'être séchés.

Afin de vérifier le greffage de PAA, des tests sur lame d'or ont également été effectués avec le même protocole. Cependant pour vérifier la pertinence du rinçage et s'assurer de l'élimination de la matière physisorbé, les substrats d'or ont été rincés avec des solvants supplémentaires (Acétone, Ethanol, NaOH et DMF), sous ultrasons pendant 10 min.

Le couple TEA (donneur sacrificiel) /complexe Ru (facilite le transfert d'électrons) permet d'exalter la réduction de sel d'aryle diazonium (NBD) en radical phényl sous l'irradiation. Sans la présence de ce couple, la formation du film de PAA est possible mais plus lente et la métallisation est également possible.

### II.2. Caractérisation des dépôts de PAA.

Cette caractérisation a été effectuée par différentes méthodes.

### A. Mesure de l'angle de contact.

La mesure de l'angle de contact se fait sur un appareil Dataphysics-OCA15 EC, équipé d'une caméra CCD (pour « *Charge-Coupled Device* »). Après greffage de PAA, l'angle de contact chute aux alentours de 60°.

Les résultats sont regroupés dans le Tableau 1 ci-après :

**Tableau 1 : Moyenne des mesures d'angles de contact pour 4 polymères différents (ABS, ABS-PC, PA, PVC et lame d'or) vierges et après greffage de PAA**

| | ABS | ABS/PC | PA | PVC | Lame d'or |
|---|---|---|---|---|---|
| Vierge | 90 | 81,8 | 63,2 | 98 | 90 |
| Greffage de PAA | 65,8 | 66 | 63,4 | 67,2° | 56 |

### B. Caractérisation InfraRouge.

Les spectres infrarouges ont été enregistrés sur un spectromètre Bruker Vertex 70 équipé d'une réflexion totale atténuée (ATR) Pike-Miracle accessoire. Le détecteur est un MCT. Les spectres ont été obtenus après 256 scans avec une résolution de 2 cm⁻¹.

Le greffage de PAA est confirmé par l'analyse par spectrométrie IR. Quel que soit le substrat, les bandes spécifiques à 1715∼1732 cm⁻¹ (Elongation C=O de l'acide COOH) et 1575∼1592 cm⁻¹ (Elongation C=O de la forme carboxylate COO-) sont présentes (Figure 2).

### C. Caractérisation XPS.

Les études XPS ont été réalisées avec un spectromètre Kratos Axis Ultra DLD, en utilisant le monochromatique Al Ka ligne à 1486,6 eV. L'énergie de passage de l'analyseur à été maintenue constante à 20 eV pour C₁ₛ, analyse du niveau de base. L'angle de collection de photoélectrons est de 90° par rapport au plan de l'échantillon, qui prévoit une profondeur d'échantillonnage de la sonde intégrée à 15 nm dans le cas de substrat dense.

Après greffage de PAA, le spectre C₁ₛ est caractéristique de la présence de PAA. En effet, on observe 2 pics à 289,76 et 285,74 eV qui correspondent respectivement aux groupements -COOH/COO⁻ et -CH₂/CH de l'acide polyacrylique (Figure 3).

### II.3. Métallisation.

### A. Chélation des ions métalliques.

La chélation des ions Cu²⁺ est effectuée par immersion pendant 10 min du substrat dans une solution de cuivre/ammoniac ([Cu²⁺] = 0,1M / [NH₃] = 0,6 M) dans l'eau. Cette chélation est suivie d'un rinçage NaOH à 0,1 M pendant 1 min pour éliminer le CuSO₄ physisorbé.

### B. Réduction des ions métalliques.

La réduction des ions Cu²⁺ est effectuée par immersion pendant 10 min du substrat dans une solution réductrice de borohydrure de sodium (NaBH₄ = 0,1 M) dans une solution de soude (0,1 M) à 70°C. Cette réduction est suivie d'un rinçage NaOH à 0,1 M pendant 1 min pour éliminer la matière physisorbée (NaBH₄, NaOH en particulier).

### C. Bain Electroless.

La croissance de la couche métallique se fait par immersion du substrat dans un bain de métallisation industrielle de cuivre, dit « Electroless » provenant de société MacDermid (Référence : M Copper 85 MacDermid). Comme tous les bains de métallisation, c'est une solution stable à température ambiante qui possède un cation métallique, sous forme de CuSO₄, un réducteur (Formaldéhyde), un complexant et un pH constant (pH = 12) ajusté à la soude.

La température de métallisation idéale est de 48°C. La métallisation spontanée ne peut avoir lieu qu'à la surface des particules métalliques de cuivre déposées précédemment. Celles-ci catalysent la déshydrogénation des réducteurs et donc leur oxydation. Les réducteurs et sels de cuivre complexés sont supposés être adsorbés à la surface des particules métalliques. La sphère de coordination des sels de cuivre est modifiée et les électrons du réducteur sont transmis aux ions cuivre pour former le cuivre à l'état métallique. Le processus est ensuite auto-catalytique. Néanmoins, le mécanisme de cette réduction est encore largement étudié et de nombreux modèles mathématiques tentent encore de l'expliquer.

Le temps d'immersion dans ce bain détermine l'épaisseur de la couche métallique déposée sur le substrat. Dans le cas présent, une immersion de 15 min est appliquée pour l'obtention d'une couche de 1 µm. Les échantillons sont ensuite rincés à l'eau MilliQ, sous ultrasons pendant 10 min avant d'être séchés.

### II.4. Test sur la couche métallique.

L'adhérence mécanique entre la couche métallique et le substrat a été étudiée par un test d'adhésion consistant en un test scotch quantitatif inspiré par la norme ASTM D3359 scotch test (test du ruban à coupe transversale). Ce critère très utilisé permet une comparaison directe de l'adhérence des films obtenus dans des conditions différentes sur des substrats similaires et est le test utilisé par les industriels.

### A. Principe.

La procédure test d'adhésion s'effectue suivant 4 étapes décrites ci-dessous :
Etape 1 : Utilisation d'un instrument coupeur pour établir le périmètre de test soit 16 carrés bien distincts sur la surface de l'échantillon métallisé.
Etape 2 : Nettoyage de la zone des 16 carrés à l'aide d'un pinceau selon la direction de coupe.
Etape 3 : Dépôt d'une bande d'adhésif normalisé dans le sens de la coupe vertical ou transversal.
Etape 4 : Après 5 min, on retire l'adhésif avec un angle de 60°, moins le nombre de carrés arrachés est grand plus l'adhésion est élevée.

### B. Résultat.

En prenant l'exemple du PVC greffé avec du PAA selon le protocole du point II.1 et métallisé selon le protocole du point II.3, on constate qu'aucun carré n'est arraché après le test d'adhésion.

### III. Protocole de greffage de PAA par voie jet d'encre et irradiation visible suivi d'une métallisation sur des substrats souples de polyéthylène téréphtalate.

### III.1. Greffage de PAA.

Tout d'abord, afin d'éviter toute pollution ou contamination par des agents externes, les substrats sont soumis à un rinçage au détergent industriel (TFD4) pendant 10 min sous ultrasons.

Dans un premier temps, la réduction des sels de diazonium s'effectue par irradiation dans le visible via l'utilisation d'une lampe de bureau d'une puissance de 75 W. Dans un second temps, l'irradiation est également source de chaleur et contribue vraisemblablement à l'accélération de la polymérisation de l'acide acrylique.

Pour améliorer la mouillabilité de la solution projetée par jet d'encre sur le substrat, un épaississant est ajouté dans le milieu réactionnel. Il s'agit d'un polymère d'acide polyacrylique (PAA, 30 000 g/mol).

Enfin, en vue de la métallisation, un sel de cuivre est ajouté à cette solution. Ainsi, la chélation des ions cuivre est effectuée en même temps que le greffage de PAA. La solution réactive contient donc un sel de diazonium / l'acide acrylique / épaississant PAA / CuSO₄.

Du 4-nitrobenzènediazonium (NBD ; 0,205 g) a été solubilisé dans une solution contenant 2 mL d'une solution acide aqueuse (H₂SO₄ à 0,5 M), 2 mL d'acide acrylique, 130 mg d'épaississant (PAA) et 240 mg de sel de cuivre (CuSO₄, 5H₂O).

La solution est déposée ensuite directement sur le substrat par impression par jet d'encre, via l'utilisation d'une imprimante commerciale EPSON Stylus Photo P50.

Le substrat + dépôt jet d'encre est ensuite irradié par une lampe de bureau de 75 W pendant une durée de 10 min.

Le greffage de PAA est confirmé par l'analyse par spectrométrie IR (Figure 4).

### III.2. Réduction des ions métalliques.

La réduction des ions Cu²⁺ est effectuée par immersion pendant 3 min du substrat dans une solution réductrice de borohydrure de sodium (NaBH₄ = 0,1 M) dans une solution de soude (0,1 M) à 50°C. Cette réduction est suivie d'un rinçage NaOH à 0,1 M pendant 1 min pour éliminer la matière physisorbée (NaBH₄, NaOH en particulier) .

### III.3. Bain Electroless.

La croissance de la couche métallique se fait par immersion du substrat dans un bain de métallisation industrielle de cuivre, dit « Electroless » provenant de société MacDermid (Réf : M Copper 85 MacDermid). Comme tous les bains de métallisation, c'est une solution stable à température ambiante qui possède un cation métallique, sous forme de CuSO₄, un réducteur (Formaldéhyde), un complexant et un pH constant (pH = 12) ajusté à la soude.

La température de métallisation idéale est de 48°C. La métallisation spontanée ne peut avoir lieu qu'à la surface des particules métalliques de cuivre déposées précédemment. Celles-ci catalysent la déshydrogénation des réducteurs et donc leur oxydation. Les réducteurs et sels de cuivre complexés sont supposés être adsorbés à la surface des particules métalliques. La sphère de coordination des sels de cuivre est modifiée et les électrons du réducteur sont transmis aux ions cuivre pour former le cuivre à l'état métallique. Le processus est ensuite auto-catalytique. Néanmoins, le mécanisme de cette réduction est encore largement étudié et de nombreux modèles mathématiques tentent encore de l'expliquer.

Le temps d'immersion dans ce bain détermine l'épaisseur de la couche métallique déposée sur le substrat. Dans le cas présent, une immersion de 15 min est appliquée pour l'obtention d'une couche de 1 µm. Les échantillons sont ensuite rincés à l'eau MilliQ, sous ultrasons pendant 10 min avant d'être séchés.

Des photographies d'un substrat de polyéthylène téréphtalate traité conformément selon les protocoles des points III.1, III.2 et III.3 sont présentées aux Figures 5A et 5B.

### III.4. Résultat du scotch test d'adhésion de la couche métallique.

En pratiquant le scotch test inspiré par la norme ASTM D3359 précédemment décrit, on constate qu'aucun carré n'est arraché après le test d'adhésion.

### IV. Autre protocole de greffage de PAA par voie jet d'encre et irradiation visible suivi d'une métallisation sur des substrats souples de polyéthylène téréphtalate.

### IV.1. Greffage de PAA.

Tout d'abord, afin d'éviter toute pollution ou contamination par des agents externes, les substrats sont soumis à un rinçage au détergent industriel (TFD4) pendant 10 min sous ultrasons.

Dans un premier temps, la réduction des sels de diazonium s'effectue par irradiation dans le visible via l'utilisation d'une lampe de bureau d'une puissance de 75 W. Dans un second temps, l'irradiation est également source de chaleur et contribue vraisemblablement à l'accélération de la polymérisation de l'acide acrylique.

Par ailleurs, pour favoriser la réduction, un complexe de ruthénium favorisant le transfert d'électron et un donneur d'électrons sacrificiel sont ajoutés dans le milieu réactionnel.

D'autre part, pour améliorer la mouillabilité de la solution projetée par jet d'encre sur le substrat, un épaississant est ajouté dans le milieu réactionnel. Il s'agit dans notre cas d'un polymère d'acide polyacrylique (30 000 g/mol).

Enfin, en vue de la métallisation, un sel de cuivre est ajouté à cette solution. Ainsi, la chélation des ions cuivre est effectué en même temps que le greffage de PAA.

Ainsi, le système complet contient un sel de diazonium / l'acide acrylique / Complexe favorisant le transfert d'électron à base de Ruthénium / Donneur sacrificiel / épaississant PAA / CuSO₄.

Du 4-nitrobenzènediazonium (NBD ; 0,205 g) a été solubilisé dans une solution contenant 2 mL d'une solution de chlorure de Tris(bipyridine) ruthénium (II) (Complexe Ru ; 5.10⁻³ M), 2 ml d'une solution de triéthylamine (TEA, 5.10⁻² M) comme donneur sacrificiel d'électrons, 2 mL d'une solution acide aqueuse (H₂SO₄ à 0,5 M), 2 mL d'acide acrylique, 130 mg d'épaississant et 240 mg de sel de cuivre (CuSO₄, 5H₂O).

La solution est déposée ensuite directement sur le substrat par impression par jet d'encre, via l'utilisation d'une imprimante commerciale EPSON Stylus Photo P50.

Le substrat + dépôt jet d'encre est ensuite irradié par une lampe de bureau pour une durée allant de 30 sec à 10 min.

### IV.2. Réduction des ions métalliques.

La réduction des ions Cu²⁺ est effectuée par immersion pendant 3 min du substrat dans une solution réductrice de borohydrure de sodium (NaBH₄ = 0,1 M) dans une solution de soude (0,1 M) à 50°C. Cette réduction est suivie d'un rinçage NaOH à 0,1 M pendant 1 min pour éliminer la matière physisorbée (NaBH₄, NaOH en particulier).

### IV.3. Bain Electroless.

Afin d'obtenir un revêtement d'or, la croissance de la couche métallique se fait *via* l'immersion dans deux bains Electroless de cuivre d'abord puis d'or.

Dans un premier temps, la croissance de la couche métallique se fait par immersion du substrat dans un bain de métallisation industrielle de cuivre, dit « Electroless » provenant de la société MacDermid (Réf : M Copper 85 MacDermid). Comme tous les bains de métallisation, c'est une solution stable à température ambiante qui possède un cation métallique, sous forme de CuSO₄, un réducteur (Formaldéhyde), un complexant et un pH constant (pH = 12) ajusté à la soude.

La température de métallisation idéale est de 48°C. La métallisation spontanée ne peut avoir lieu qu'à la surface des particules métalliques de cuivre déposées précédemment. Celles-ci catalysent la déshydrogénation des réducteurs et donc leur oxydation. Les réducteurs et sels de cuivre complexés sont supposés être adsorbés à la surface des particules métalliques. La sphère de coordination des sels de cuivre est modifiée et les électrons du réducteur sont transmis aux ions cuivre pour former le cuivre à l'état métallique. Le processus est ensuite auto-catalytique. Néanmoins, le mécanisme de cette réduction est encore largement étudié et de nombreux modèles mathématiques tentent encore de l'expliquer.

Le temps d'immersion dans ce bain détermine l'épaisseur de la couche métallique déposée sur le substrat. Dans le cas présent, une immersion de 15 min est appliquée pour l'obtention d'une couche de 1 µm. Les échantillons sont ensuite rincés à l'eau MilliQ, sous ultrasons pendant 10 min avant d'être séchés.

Dans un second temps, la croissance d'une couche d'or sur le substrat cuivré s'effectue par l'immersion dans un bain Electroless d'or, basé sur le même principe que le bain Electroless de cuivre. Le bain Electroless provient de la société Alfa AESAR, contient 3,7 g/l de cation métallique. La température de dépôt doit être comprise entre 60 et 70°C et la vitesse de dépôt est d'environ 1 µm/h. Dans le cas présent, une immersion de 30 min est appliquée pour l'obtention d'une couche de 0,5 µm.

La Figure 6 propose des photographies du substrat de polyéthylène téréphtalate traité conformément au protocole du point IV.1 (Figure 6A) et traités conformément aux protocoles des points IV.1, IV.2 et IV.3 (Figure 6B). dans ce dernier cas, est visible la métallisation d'or des pistes imprimées.

### IV.4. Résultat du scotch test d'adhésion de la couche métallique.

En pratiquant le scotch test inspiré par la norme ASTM D3359 précédemment décrit, on constate qu'aucun carré n'est arraché après le test d'adhésion.

### V. Traitement localisé de surfaces de plexiglas® selon le procédé de l'invention.

Ce traitement localisé de surfaces de plexiglas@ est mis en oeuvre par un procédé de type pochoir où des zones sont épargnées par un adhésif vinyle. Ce procédé permet de réaliser un traitement localisé reproduisant les motifs évidés du pochoir appliqué.

### V.1. Préparation des plaques de plexiglas®.

Le support de plexiglas@ est lavé à l'eau savonneuse, rincé à l'eau puis séché. Il est ensuite nettoyé à l'acétone puis à l'alcool et séché à l'azote gaz.

Le masque de vinyle est collé sur la surface nettoyée et les parties évidées du masque sont nettoyées avec une solution d'acide paratoluène sulfonique (0,9 g pour 30 ml d'eau). Les parties évidées sont ensuite rincées à l'eau, séchées à l'azote gaz et prêtes à être enduites par l'une des formulations ci-après.

### V.2. Formulations testées.

Trois formulations différentes ont été testées.

### A. 1^{er} exemple de formulation :

200 mg de 4-nitrophényl diazonium tétrafluoroborate sont ajoutés à une solution aqueuse de chlorure de Tris(bipyridine) ruthénium (II) hexahydraté (4 ml, 5.10⁻⁴ M) et de triéthylamine (2ml, 0,1 M). Ensuite, de l'acide acrylique (2 ml) et du copolymère acide acrylique-acide maléique sous forme de sel de sodium (200 mg, masse moyenne M = 50 000 g.mol⁻¹) sont ajoutés à la solution précédente.

Cette formulation est préparée extemporanément pour palier son manque de stabilité.

### B. 2^{nd} exemple de formulation :

100 mg de 4-nitrophenyl diazonium tetrafluoroborate sont dissous dans 2 ml d'eau déionisée et 1 ml d'acide acrylique pur et la solution est bien agitée jusqu'à dissolution complète. Puis, 1 ml de triélyamine (0,1 M) est ajouté à cette solution. Après une bonne agitation, 50% de glycérol est versé sur les 4 ml de la solution précédente. La solution est bien agitée et 50 µl d'une solution de de chlorure de Tris(bipyridine) ruthénium (II) hexahydraté (5.10⁻⁴ M) sont additionnés pour obtenir la solution finale prête à *l'emploi.*

*Cette formu*lation est stable au moins une journée stockée à l'abri de la lumière.

### C. 3^{ème} exemple de formulation :

100 mg de 4-nitrophenyl diazonium tetrafluoroborate sont dissous dans 2 ml d'eau déionisée et 1 ml d'acide acrylique pur et la solution est bien agitée jusqu'à dissolution complète. Puis, 100 mg de copolymère acide acrylique-acide maléique sous forme de sel de sodium (masse moyenne M = 50 000 g.mol⁻¹) dissous dans 1 ml de triélyamine (0,1 M) sont ajoutés à cette solution. La solution est bien agitée et 50 µl d'une solution de chlorure de Tris(bipyridine) ruthénium (II) hexahydraté (5.10⁻⁴ M) sont additionnés pour obtenir la solution finale prête à l'emploi.

Cette formulation est stable au moins une journée stockée à l'abri de la lumière.

### V.3. Irradiation du masque.

Les parties évidées du masque de vinyle sont enduites par l'une des trois formulations précédentes et recouvertes d'un matériau souple ou rigide transparent (verre, feuille de PET, ...) afin de bien étaler la solution sur le masque ou sur la surface en absence de masque.

L'irradiation est faite à l'aide d'une lampe halogène de bureau (OSRAM, 100W) irradiant dans le visible et dure préférentiellement 25 min. Un temps minimum de 15 min est préconisé.

Ensuite, le matériau souple ou rigide transparent est retiré et la plaque de plexiglas® est rincée à l'eau et séchée à l'azote gaz. Le masque en vinyle est décollé et la plaque de plexiglas® est à nouveau rincée à l'eau, à l'alcool et séchée à l'azote gaz. Le dessin du masque est obtenu par faible écoulement d'eau sur la plaque de plexiglas® (Figure 7) .

Lors du protocole, la formation de bulles sous la lamelle de verre atteste du mécanisme de clivage du sel de diazonium. Le masquage partiel de la lumière par une feuille d'aluminium inhibe la formation de ses bulles pendant l'expérience.

Un tel procédé peut être utilisé pour modifier localement l'hydrophilicité/hydrophobicité du substrat pour réaliser des « pistes » qu'un liquide hydrophile/hydrophobe peut suivre lors de son écoulement évitant de fait le mouillage complet du substrat.

### RÉFÉRENCES

[1] Palacin et al., « Molecule-to-metal bonds: Electrografting polymers on conducting surfaces ». Chem. Phys. Chem, 2004. 5(10): 1469-1481.
[2] Demande internationale WO 2008/078052 au nom du CEA publiée le 3 juillet 2008.
[3] Demande internationale WO 2005/033378 au nom du CEA publiée le 14 avril 2005.
[4] Demande internationale WO 2006/097611 au nom du CEA publiée le 21 septembre 2006.

## Revendications

1. Procédé de préparation d'un film organique à la surface d'un support solide par greffage chimique radicalaire, comprenant les étapes consistant à :
a) appliquer, sur ladite surface, par transfert ou par projection, une solution contenant au moins un sel d'aryle clivable, un agent favorisant le transfert d'électrons et un donneur d'électrons sacrificiel, l'application par transfert consistant à appliquer ou à déposer, sur ladite surface, une couche de ladite solution dont l'épaisseur n'excède pas 5 mm, l'application par projection consistant à appliquer ou à déposer, sur ladite surface, des gouttes de ladite solution dont le volume est compris entre 1 pl et 400 µl ;
b) soumettre ladite solution à une irradiation UV ou visible moyennant quoi des entités radicalaires sont formées à partir du sel d'aryle clivable et un film organique est greffé,

2. Procédé selon la revendication 1, **caractérisé en ce que** ladite application par transfert nécessite un stylo, un pinceau, un rouleau, un marqueur, un tampon ou un microtampon.

3. Procédé selon la revendication 1, **caractérisé en ce que** ladite application par projection nécessite un pulvérisateur également connu sous le terme anglais de « spray », un pulvérisateur électrostatique, un pulvérisateur centrifuge, un vaporisateur, un brumisateur, un aérographe, une seringue, un dispositif de type jet d'encre, un dispositif de type dépôt de tache également connu sous le terme anglais de « spotter » et/ou une brosse.

4. Procédé selon l'une quelconque des revendications 1 à 3, **caractérisé en ce que** ladite étape (a) est réalisée avant ladite étape (b).

5. Procédé selon l'une quelconque des revendications 1 à 3, **caractérisé en ce que** lesdites étapes (a) et (b) sont mises en oeuvre simultanément.

6. Procédé selon l'une quelconque des revendications précédentes, **caractérisé en ce que** ladite solution comprend en outre au moins un monomère polymérisable par voie radicalaire distinct dudit sel d'aryle clivable.

7. Procédé selon l'une quelconque des revendications précédentes, **caractérisé en ce que** ladite solution comprend en outre au moins un élément choisi dans le groupe constitué par un épaississant, un gélifiant, un tensioactif ou un agent de réticulation.

8. Procédé selon l'une quelconque des revendications précédentes, **caractérisé en ce que** lesdites étapes (a) et (b) sont répétées au moins deux, trois, quatre ou cinq fois, permettant d'obtenir une structure multicouche.

9. Procédé selon l'une quelconque des revendications précédentes, **caractérisé en ce que**, préalablement à l'application, par transfert ou par projection, de la solution sur la surface du support solide, cette surface est soumise à un (pré-)traitement oxydant.

10. Procédé selon l'une quelconque des revendications précédentes, **caractérisé en ce que** lesdites étapes (a) et (b) sont suivies d'une étape consistant à appliquer, sur le film organique obtenu, par transfert ou par projection, une suspension de nano-objets.

11. Procédé selon la revendication 10, **caractérisé en ce que** ladite suspension de nano-objets est une suspension de nanoparticules.

12. Procédé selon l'une quelconque des revendications précédentes, **caractérisé en ce que** lesdites étapes (a) et (b) sont suivies d'une étape de métallisation.

13. Procédé pour réaliser au moins une piste d'écoulement d'un liquide d'intérêt sur un support solide, consistant à préparer un film organique mouillable par ledit liquide d'intérêt à la surface dudit support solide selon un procédé tel que défini à l'une quelconque des revendications 1 à 12.

14. Kit d'éléments pour la mise en oeuvre d'un procédé selon l'une quelconque des revendications 1 à 13 comprenant :
- dans un compartiment, une solution comprenant au moins un sel d'aryle clivable ou un précurseur de celui-ci, un agent favorisant le transfert d'électrons et un donneur d'électrons sacrificiel et
- des moyens pour appliquer par transfert ou par projection cette solution à la surface d'un support solide, lesdits moyens étant choisis parmi un pinceau, un rouleau, un marqueur, un stylo, un tampon, un microtampon, un pulvérisateur, un pulvérisateur électrostatique, un pulvérisateur centrifuge, un vaporisateur, un brumisateur, un aérographe, une seringue, un dispositif de type jet d'encre, un dispositif de type dépôt de tache et/ou une brosse.

## Patentansprüche

1. Verfahren zum Herstellen eines organischen Films an der Oberfläche eines festen Trägers durch radikalisches chemisches Aufpfropfen, umfassend die nachstehenden Schritte:
a) Auftragen einer Lösung, die zumindest ein spaltbares Arylsalz, ein den Transfer von Elektronen begünstigendes Mittel und einen Opfer-Elektronendonor enthält, durch Transfer oder durch Aufsprühen auf die Oberfläche,
wobei das Auftragen durch Transfer darin besteht, auf die Oberfläche eine Schicht aus der Lösung aufzutragen oder abzuscheiden, deren Dicke 5 mm nicht übersteigt,
wobei das Auftragen durch Aufsprühen darin besteht, auf die Oberfläche Tröpfchen aus der Lösung aufzutragen oder abzuscheiden, deren Volumen zwischen 1 pl und 400 µ| beträgt;
b) Aussetzen der Lösung einer Bestrahlung mit UV-Licht oder sichtbarem Licht, wodurch radikalische Einheiten ausgehend von dem spaltbaren Arylsalz gebildet werden und ein organischer Film aufgepfropft wird.

2. Verfahren nach Anspruch 1, **dadurch gekennzeichnet, dass** das Auftragen durch Transfer einen Stift, einen Pinsel, eine Walze, einen Marker, einen Stempel oder einen Mikrostempel erforderlich macht.

3. Verfahren nach Anspruch 1, **dadurch gekennzeichnet, dass** das Auftragen durch Aufsprühen einen Zerstäuber, auch bekannt unter dem englischen Ausdruck "Spray", einen elektrostatischen Zerstäuber, einen Zerstäuber mit zentrifugaler Zerstäubung, einen Verdampfer, eine Vernebelungseinrichtung, eine Airbrush-Spritzpistole, eine Spritze, eine Vorrichtung vom Typ mit Tintenstrahl, eine Vorrichtung vom Typ Spotting-Vorrichtung, auch bekannt unter dem englischen Ausdruck "spotter", und/oder eine Bürste erforderlich macht.

4. Verfahren nach einem der Ansprüche 1 bis 3, **dadurch gekennzeichnet, dass** der Schritt (a) vor dem Schritt (b) erfolgt.

5. Verfahren nach einem der Ansprüche 1 bis 3, **dadurch gekennzeichnet, dass** die Schritte (a) und (b) gleichzeitig erfolgen.

6. Verfahren nach einem der vorangehenden Ansprüche, **dadurch gekennzeichnet, dass** die Lösung ferner zumindest ein radikalisch polymerisierbares Monomer enthält, das von dem spaltbaren Arylsalz verschieden ist.

7. Verfahren nach einem der vorangehenden Ansprüche, **dadurch gekennzeichnet, dass** die Lösung ferner zumindest ein Element, ausgewählt aus der Gruppe umfassend ein Verdickungsmittel, ein Geliermittel, ein Tensid oder ein Vernetzungsmittel, enthält.

8. Verfahren nach einem der vorangehenden Ansprüche, **dadurch gekennzeichnet, dass** die Schritte (a) und (b) zumindest zwei-, drei-, vier- oder fünfmal wiederholt werden, wodurch eine Mehrschichtstruktur erhalten werden kann.

9. Verfahren nach einem der vorangehenden Ansprüche, **dadurch gekennzeichnet, dass** vor dem Auftragen der Lösung durch Transfer oder Aufsprühen auf die Oberfläche des festen Trägers diese Oberfläche einer Oxidations(vor)behandlung unterzogen wird.

10. Verfahren nach einem der vorangehenden Ansprüche, **dadurch gekennzeichnet, dass** den Schritten (a) und (b) ein Schritt folgt, der darin besteht, auf den erhaltenen organischen Film eine Suspension aus Nanoobjekten durch Transfer oder durch Aufsprühen aufzutragen.

11. Verfahren nach Anspruch 10, **dadurch gekennzeichnet, dass** die Suspension aus Nanoobjekten eine Suspension aus Nanopartikeln ist.

12. Verfahren nach einem der vorangehenden Ansprüche, **dadurch gekennzeichnet, dass** den Schritten (a) und (b) ein Schritt des Metallisierens folgt.

13. Verfahren zum Herstellen zumindest einer Strömungsbahn für eine Flüssigkeit von Interesse auf einem festen Träger, das darin besteht, einen organischen Film, der mit der Flüssigkeit von Interesse benetzbar ist, an der Oberfläche des festen Trägers mit einem Verfahren nach einem der Ansprüche 1 bis 12 herzustellen.

14. Anordnung von Elementen zum Durchführen eines Verfahrens nach einem der Ansprüche 1 bis 13, enthaltend:
- in einem Raum eine Lösung, die zumindest ein spaltbares Arylsalz oder einen Vorläufer davon, ein den Transfer von Elektronen begünstigendes Mittel und einen Opfer-Elektronendonor enthält, sowie
- Einrichtungen zum Auftragen dieser Lösung durch Transfer oder durch Aufsprühen auf die Oberfläche eines festen Trägers, wobei die Einrichtungen ausgewählt sind aus einem Pinsel, einer Walze, einem Marker, einem Stift, einem Stempel, einem Mikrostempel, einem Zerstäuber, einem elektrostatischen Zerstäuber, einem Zerstäuber mit zentrifugaler Zerstäubung, einem Verdampfer, einer Vernebelungseinrichtung, einer Airbrush-Spritzpistole, einer Spritze, einer Vorrichtung vom Typ mit Tintenstrahl, einer Vorrichtung vom Typ Spotting-Vorrichtung, und/oder einer Bürste.

## Claims

1. A method for preparing an organic film on the surface of a solid support by radical chemical grafting, including the steps consisting in:
a) applying, onto said surface, by transfer or by spraying, a solution containing at least one cleavable aryl salt, an agent favouring electron transfer and a sacrificial electron donor,
the application by transfer consisting in applying or depositing, on said surface, a layer of said solution not exceeding 5 mm thick,
the application by spraying consisting in applying or depositing, on said surface, drops of said solution the volume of which is between 1 pl and 400 µl;
b) subjecting said solution to a UV or visible irradiation, by means of which radical entities are formed from the cleavable aryl salt and an organic film is grafted.

2. A method according to claim 1, **characterised in that** said application by transfer requires a pen, a paintbrush, a roller, a marker, a pad or a micro-pad.

3. A method according to claim 1, **characterised in that** said application by spraying requires a spray, an electrostatic spray, a centrifugal spray, an atomiser, a mist-maker, an airbrush, a syringe, a device of the inkjet type, a device of the spotter type and/or a brush.

4. A method according to any one of claims 1 to 3, **characterised in that** said step (a) is accomplished before said step (b).

5. A method according to any one of claims 1 to 3, **characterised in that** said steps (a) and (b) are implemented simultaneously.

6. A method according to anyone of the preceding claims, **characterised in that** said solution also contains at least one monomer which can be polymerised by radical means, and which is distinct from said cleavable aryl salt.

7. A method according to anyone of the preceding claims, **characterised in that** said solution also contains at least one element selected from the group consisting of a thickening agent, a gelling agent, a surfactant and a cross-linking agent.

8. A method according to anyone of the preceding claims, **characterised in that** said steps (a) and (b) are repeated at least two, three, four or five times, enabling a multilayer structure to be obtained.

9. A method according to any one of the preceding claims, **characterised in that**, prior to application, by transfer or by spraying, of the solution onto the solid support, this surface is subjected to an oxidising (pre-)treatment.

10. A method according to any one of the preceding claims, **characterised in that** said steps (a) and (b) are followed by a step consisting in applying, on the organic film obtained, by transfer or spraying, a suspension of nano-objects.

11. A method according to claim 10, **characterised in that** said suspension of nano-objects is a suspension of nanoparticles.

12. A method according to any one of the preceding claims, **characterised in that** said steps (a) and (b) are followed by a step of metallisation.

13. A method to produce at least one track in which a liquid of interest may flow over a solid support, consisting in preparing an organic film which is wettable by said liquid of interest on the surface of said solid support according to a method as defined in any one of claims 1 to 12.

14. A kit of elements for implementation of a method according to any one of claims 1 to 13 including:
- in a compartment, a solution including at least one cleavable aryl salt or a precursor of the latter, an agent favouring electron transfer and a sacrificial electron donor and
- means to apply this solution on the surface of a solid support by transfer or by spraying, said means being selected among a pen, a paintbrush, a roller, a marker, a pad, a micro-pad, a spray, an electrostatic spray, a centrifugal spray, an atomiser, a mist-maker, an airbrush, a syringe, a device of the inkjet type, a device of the spotter type and/or a brush.
